# EUROPEAN PATENT APPLICATION

(11) **EP 4 786 743 A1**
(43) Date of publication of application: **05.08.2026**
(21) Application number: 26155832.4
(22) Date of filing: 02.02.2026
(51) Int. Cl.: F01D 11/08, F01D 25/12, F01D 11/24, F01D 25/24, C04B 35/80

(54) **COVER PLATE RETENTION SYSTEM FOR A TURBINE ENGINE, AND COVER PLATE RETENTION METHOD FOR A TURBINE ENGINE**

(30) Priority: 31.01.2025 US 202519042735
(71) Applicant: RTX Corporation, Farmington, CT 06032 (US)
(72) Inventor: SCHNEIDER, Alex J., Manchester, 06042 (US); SMIDDY, Winston, South Windsor, 06074 (US); LUTJEN, Paul M., Kennebunkport, 04046 (US); WILKINS, Peter, Glastonbury, 06033 (US)
(74) Representative: Dehns

(57) **Abstract**

A cover plate retention system of a turbine engine (20) includes a gaspath component (300) having a hot side configured for exposure to a hot gaspath of the turbine engine and an opposing non-gaspath side (305). The cover plate retention system includes a cavity (310). The cavity has an opening disposed on the non-gaspath side, and is collectively defined by a pair of parallel side walls (312), a first end wall, and a second end wall (315). A top rail (330) is disposed at a top of the first end wall and extends therefrom along a major portion of the top of each of the parallel side walls (312). A bottom rail (332) is disposed a fixed or specified distance below the top rail (330) on the first end wall and extends therefrom along at least the major portion of each of the parallel side walls (312) to form a three-sided cover plate retention slot.
A cover plate retention method for the turbine engine includes forming the cavity in the gaspath component; forming the top rail; and forming the bottom rail.

## Description

### FIELD OF THE INVENTION

The subject matter disclosed herein relates to providing cooling flow to gas turbine components and, in particular, to providing retention of a cover plate on a cooling cavity of a gas turbine component.

### BACKGROUND OF THE INVENTION

Gas turbine engines or jet engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (i.e., gaspath components). Therefore, it is desirable that such components be made of heat-resistant materials such as superalloys or ceramic matrix composites (CMCs), which can withstand much higher operating temperatures than components composed of superalloys. However, to increase their operational lifespans, precautions can be taken to cool gaspath components made of superalloy or CMC by subjecting the components to a flow of cooling fluid (e.g., air).

To provide cooling of such components, secondary air flows, i.e., secondary to the main flow of high-energy, high temperature gas, can be used to cool gaspath components of the gas turbine engines that are exposed to high temperatures as well as to prevent high temperature gas from reaching those components that are not directly exposed to the hot gas flow. To facilitate the cooling of the components, internal cavities can be provided within the components themselves to allow secondary cooling air to flow from one region to another region of the turbine. For example, a component such as a blade outer air seal (BOAS, also sometimes call a blade shroud) can be provided with an internal cooling cavity to allow cooling air to flow to a region between the engine casing and the outer radial surface of the BOAS into the internal cooling cavity of the BOAS to cool the interior of the component and thereby reduce its thermal deterioration due to exposure to the hot gas path.

Many current designs utilize flat plates which seal or provide impingement cooling to such internal cavities. In metallic components, these plates are often assembled with a machined component and attached via brazing or welding. However, in some applications, including those with CMC components, brazing and welding operations for attaching these plates is not desired or compatible. Accordingly, a plate retention system that does not require such mechanical adhesion is preferable in these scenarios.

The above information disclosed in this Background section is only for understanding of the background of the inventive concepts and, therefore, it may contain information that does not constitute prior art.

### SUMMARY OF THE INVENTION

According to an aspect of the present invention, there is provided a cover plate retention system for a gaspath component of a turbine engine, wherein the gaspath component has a hot side configured for exposure to a hot gaspath of the turbine engine and an opposing non-gaspath side. The cover plate retention system includes a cavity having an opening disposed on the non-gaspath side of the gaspath component, the opening having a pair of parallel side walls, a first end wall, and a second end wall. A top rail is disposed at a top of the first end wall and extends therefrom along a major portion of the top of each of the parallel side walls. A bottom rail is disposed a (e.g. specified or fixed) distance below the top rail on the first end wall and extends therefrom along at least the major portion of each of the parallel side walls to form a cover plate retention slot.

In the context of the present invention, the term "rectangular" is intended to cover shapes that are substantially rectangular, for example having rounded, truncated and/or angled corners.

In the context of the present invention, the term "top" refers to a side or surface that is on, facing or proximate the non-gaspath side (i.e. closer to the non-gaspath side than the hot side of the component).

In the context of the present invention, the term "below" refers to a position that is comparatively further away from the non-gaspath side of the gaspath component and closer to the hot side of the gaspath component.

Optionally, and in accordance with the above, the opening may be substantially rectangular, and the system may further include a substantially rectangular cover plate dimensioned to slidably engage the cover plate retention slot.

Optionally, and in accordance with any of the above, the substantially rectangular cover plate may be metallic.

Optionally, and in accordance with any of the above, the substantially rectangular cover plate may be flexible to permit insertion into the cover plate retention slot.

Optionally, and in accordance with any of the above, a portion of the non-gaspath side of the gaspath component transverse to the second end wall may be recessed to a height of the bottom rail so as to permit the substantially rectangular cover plate to engage the cover plate retention slot without flexing.

Optionally, and in accordance with any of the above, the gaspath component may be a CMC component.

Optionally, and in accordance with any of the above, the substantially rectangular cover plate may be metallic.

Optionally, and in accordance with any of the above, the gaspath component may be a CMC component.

Optionally, and in accordance with any of the above, the substantially rectangular cover plate may be metallic.

Optionally, and in accordance with any of the above, the substantially rectangular cover plate may be formed of CMC.

According to another aspect of the present invention there is provided a cover plate retention method for a gaspath component of a turbine engine, wherein the gaspath component has a hot side configured for exposure to a hot gaspath of the turbine engine and an opposing non-gaspath side. The method includes forming a cavity having an opening disposed on the non-gaspath side of the gaspath component, the opening having a pair of parallel side walls, a first end wall, and a second end wall. The method further includes forming a top rail disposed at a top of the first end wall and extending therefrom along a major portion of the top of each of the parallel side walls, and forming a bottom rail disposed a fixed or specified distance below the top rail on the first end wall and extending therefrom along at least the major portion of each of the parallel side walls to form a cover plate retention slot.

Optionally, and in accordance with any of the above, the gaspath component may be made of superalloy and forming the top rail and forming the bottom rail may include machining the cover plate retention slot into the first end wall, and into the major portion of the parallel side walls of the opening.

Optionally, and in accordance with any of the above, the opening may be substantially rectangular, and the method may further include sliding a substantially rectangular cover plate into the cover plate retention slot.

Optionally, and in accordance with any of the above, the gaspath component may be formed of ceramic matrix composite (CMC), and forming the top rail and forming the bottom rail may include machining the cover plate retention slot into the first end wall, and into the major portion of the parallel side walls of the opening before or after densification.

Optionally, and in accordance with any of the above, the gaspath component may be formed of ceramic matrix composite (CMC), and forming the top rail and forming the bottom rail may include laying up a preform with one or more layers positioned over a first noodle forming the top rail and a second noodle spaced therefrom forming the bottom rail in the preform, with the space therebetween forming the cover plate retention slot into the first end wall, and the major portion of the parallel side walls of the opening after densification.

Optionally, and in accordance with any of the above, the method may further include forming a recess into a portion of the non-gaspath side of the gaspath component transverse to the second end wall, with the recess disposed at a height of the bottom rail so as to permit the substantially rectangular cover plate to engage the cover plate retention slot without flexing.

Optionally, and in accordance with any of the above, the substantially rectangular cover plate may be metallic, and sliding the substantially rectangular cover plate into the cover plate retention slot may include flexing of the substantially rectangular cover plate.

According to another aspect of the present invention, there is provided a cover plate retention system for a ceramic matrix composite (CMC) blade outer air seal (BOAS) segment of a turbine engine, wherein the CMC BOAS segment has a hot side configured for exposure to a hot gaspath of the turbine engine and an opposing non-gaspath side. The retention system includes: a cavity having a substantially rectangular opening disposed on the non-gaspath side of the CMC BOAS segment, the opening having a pair of parallel side walls, a first end wall, and a second end wall; a top rail disposed at a top of the first end wall and extending therefrom along a major portion of the top of each of the parallel side walls; a bottom rail disposed a fixed or specified distance below the top rail on the first end wall and extending therefrom along at least the major portion of each of the parallel side walls to form a cover plate retention slot; and a substantially rectangular metal cover plate dimensioned to slidably engage the cover plate retention slot.

Optionally, and in accordance with any of the above, the bottom rail may extend a full length of the parallel side walls to form a sealing structure.

Optionally, and in accordance with any of the above, a portion of the non-gaspath side of the CMC BOAS segment transverse to the second end wall may be recessed to a height of the bottom rail so as to permit the substantially rectangular metal cover plate to engage the cover plate retention slot without flexing.

### BRIEF DESCRIPTION OF FIGURES

The features of the invention believed to be novel and the elements characteristic of the invention are set forth with particularity in the appended claims. The figures are for illustration purposes only and are not drawn to scale. The invention itself, however, both as to organization and method of operation, can best be understood by reference to the description of the preferred embodiment(s) which follows, taken in conjunction with the accompanying drawings in which:
FIG. 1 schematically illustrates a partial cross section of an exemplary gas turbine engine;
FIG. 2A schematically illustrates a cutaway view of a first example embodiment of a cavity and cover plate retention arrangement in accordance with the present invention;
FIG. 2B schematically illustrates an end view cross section of the first example embodiment of the cavity and cover plate retention arrangement in accordance with the present invention;
FIG. 2C schematically illustrates a side view cross section of the first example embodiment of the cavity and cover plate retention arrangement in accordance with the present invention;
FIG. 3A schematically illustrates a cutaway view of a second example embodiment of a cavity and cover plate retention arrangement in accordance with the present invention;
FIG. 3B schematically illustrates a side view cross section of the second example embodiment of the cavity and cover plate retention arrangement in accordance with the present invention;
FIG. 4A schematically illustrates a partial cross section of an example embodiment of a cover plate slot in accordance with the present invention;
FIG. 4B schematically illustrates a partial cross section of another example embodiment of a cover plate slot in accordance with the present invention;
FIG. 4C schematically illustrates a partial cross section of a further example embodiment of a cover plate slot in accordance with the present invention;
FIG. 4D schematically illustrates a partial cross section of yet another example embodiment of a cover plate slot in accordance with the present invention; and
FIG. 5 is a flow diagram of an example process in accordance with the present invention.

### DETAILED DESCRIPTION OF THE INVENTION

The embodiments of the present invention can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present invention may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the invention. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

The present invention is directed to a cover plate retention system that employs a cover plate retention slot to secure greater than 50% of the perimeter of the cover plate. The retention slot may be formed by top and bottom rails that define a slot therebetween on two parallel side walls of a cavity opening and a first end wall disposed between the two parallel side walls. In use, a cover plate may be slid into the cover plate retention slot to secure the cover plate without brazing or welding operations. When a top of the cavity opening is at a radial distance, the cover plate may have a curve to match the radial distance if the slot also has such a radius.

While the illustrated examples and discussion below often make reference to a blade outer air seal (BOAS) and BOAS segments, it should be recognized that the present invention is not limited to BOAS but includes any superalloy or CMC gaspath component for which a cooling cavity is desirable, for example, combustion liners and vane platforms.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces into the flow of the hot gases, i.e., faces upstream. The trailing edge/portion of a structure is the edge/portion that the faces away from the flow of the hot gases, i.e., faces downstream.

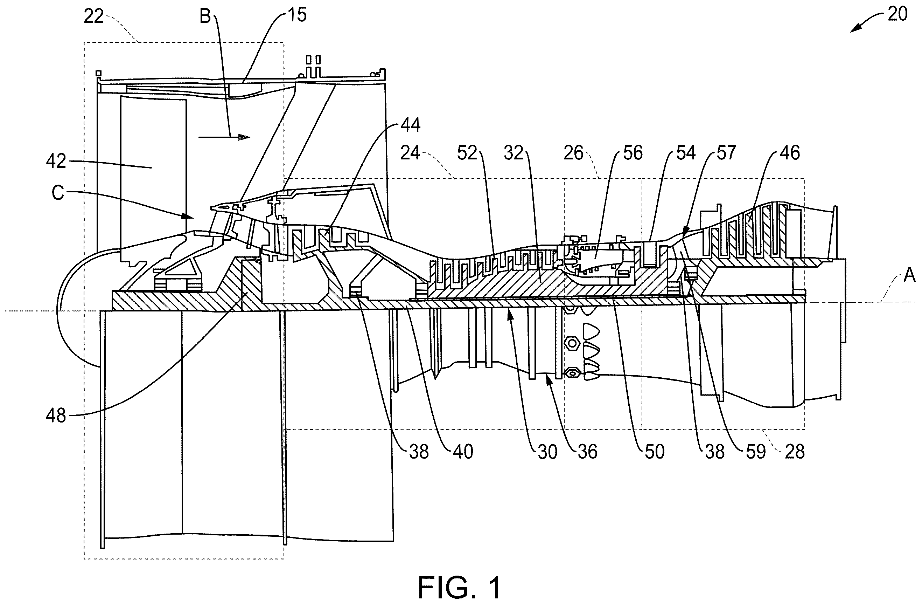

FIG. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although FIG. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high-speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

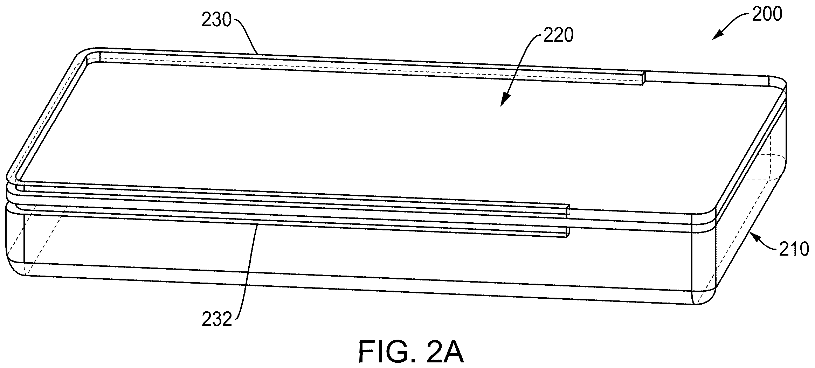

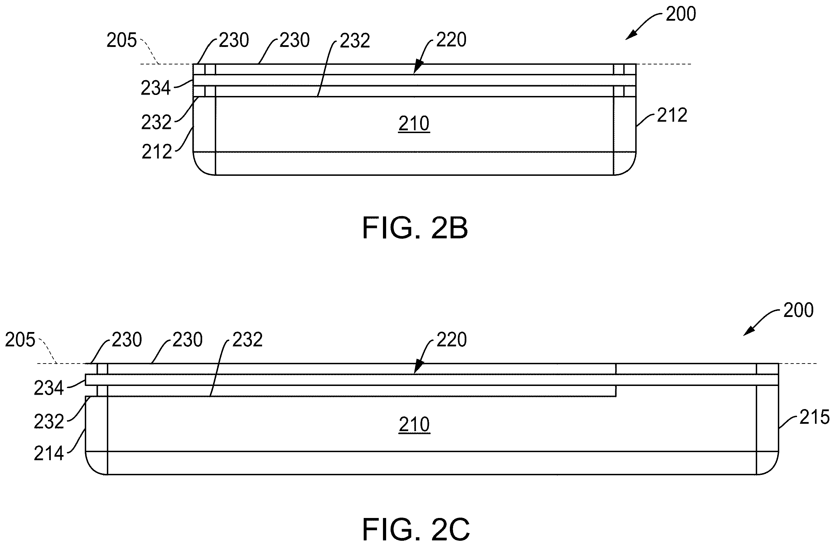

With reference to FIGS. 2A, 2B, and 2C, a first example embodiment of a cover plate retention system for a gaspath component 200 of a turbine engine is illustrated. Details of the gaspath component are omitted for clarity, but the component 200 has a hot side (not shown) configured for exposure to a hot gaspath of the turbine engine and an opposing non-gaspath side 205.

A cavity 210 having an opening is formed or otherwise disposed on the non-gaspath side 205 of the gaspath component 210. The cavity 210 may be substantially prismatic and may, for example, be formed as a three-dimensional rectangle. Accordingly, the opening may be rectangular. The opening has a pair of parallel side walls 212, a first end wall 214, and a second end wall 215. The first and second end walls 214 and 215 may be transverse to the parallel side walls 212. In other embodiments, the end wall may be curved, curvilinear, or have plural straight walls, for example.

A top rail 230 is disposed at a top of the first end wall 214, and extends around a corner or the like with each of the parallel side walls 212 so as to extend from the first end wall 214 along a major portion of the top of each of the parallel side walls 212. As used herein, a major portion refers to a length greater than 50% of the length and may, for example, extend between 60% and 80% of the length of parallel side walls 212.

A bottom rail 232 is disposed a specified distance below the top rail 230 on the first end wall 214 and extends therefrom along at least the major portion of each of the parallel side walls 212 to form a cover plate retention slot 234 having a height equal to the specified distance. In certain embodiments, the specified distance may be fixed and in others it may vary, such as along a slope to form a wedge.

In one or more embodiments of the present invention, the opening may be substantially rectangular, and a substantially rectangular cover plate 220 may be dimensioned to slidably engage the cover plate retention slot 234. In the first embodiment illustrated in FIGS. 2A, 2B, and 2C, the cover plate 220 may be formed of a metal alloy (i.e., is metallic) that permits the cover plate 220 to elastically bend or flex in order to be inserted into and slide along the cover plate retention slot 234. When fully inserted, the cover plate 220 may be retained in position by the cover plate retention slot 234 formed by the top rail 230 and bottom rail 232 on three sides of the cover plate 220, and may be prevented from sliding back out by second end wall 215 after relaxing to an unbent/unflexed position.

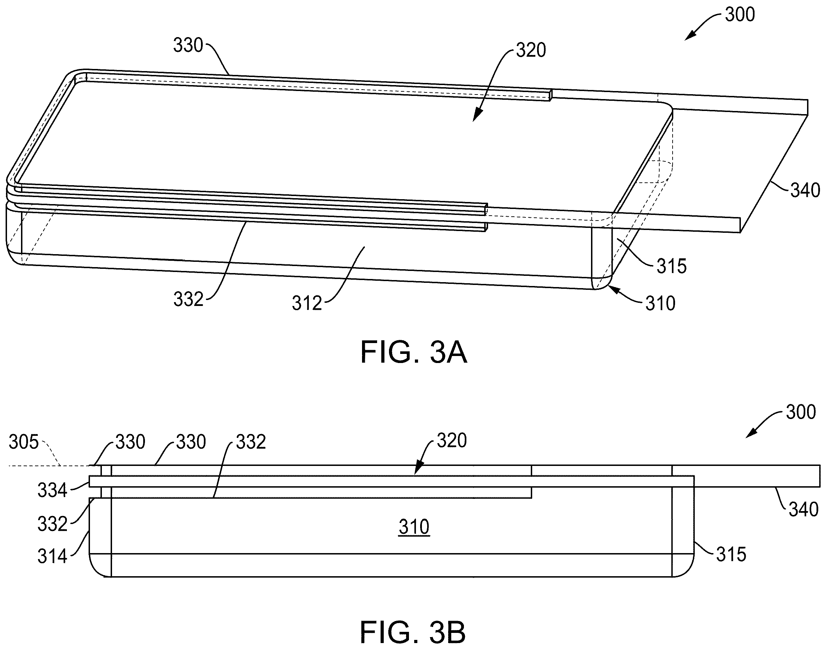

With reference to FIGS. 3A and 3B, a second example embodiment of a cover plate retention system for a gaspath component 300 of a turbine engine is illustrated. Details of the gaspath component are omitted for clarity, but the component 300 also has a hot side (not shown) configured for exposure to a hot gaspath of the turbine engine and an opposing non-gaspath side 305.

A cavity 310 having an opening is formed or otherwise disposed on the non-gaspath side 305 of the gaspath component 310. As in the embodiment of FIGS. 2A-2C, the cavity 310 may be substantially prismatic and may, for example, also be formed as a three-dimensional rectangle such that the opening may be rectangular. The opening has a pair of parallel side walls 312, a first end wall 314, and a second end wall 315. The first and second end walls 314 and 315 may be transverse to the parallel side walls 312.

As with the first embodiment, a top rail 330 is disposed at a top of the first end wall 314, and extends around a corner with each of the parallel side walls 312 so as to extend from the first end wall 314 along a major portion of the top of each of the parallel side walls 312. Again, as used herein, a major portion refers to a length greater than 50% of the length and may, for example, extend between 60% and 80% of the length of parallel side walls 312.

A bottom rail 332 is disposed a fixed or specified distance below the top rail 330 on the first end wall 314 and extends therefrom along at least the major portion of each of the parallel side walls 312 to form a cover plate retention slot 334 having a height equal to the fixed or specified distance. In various embodiments, the bottom rail 332 may extend around a full perimeter of the opening in order to provide a sealing surface.

In one or more embodiments of the present invention, the opening may be substantially rectangular, and a substantially rectangular cover plate 320 may be dimensioned to slidably engage the cover plate retention slot 334. In the second embodiment illustrated in FIGS. 3A and 3B, the cover plate 320 may be formed of a flat piece of CMC or a metal alloy (i.e., is metallic). When nickel alloys are used for cover plate 320 and gaspath component 300 is formed of CMC, a coating may be applied to prevent interaction between the nickel and the CMC.

The non-gaspath side 305 of gaspath component 300 may include a recess 340 that extends transversely from end wall 315 to permit the cover plate 320 to be inserted into and slide along the cover plate retention slot 334 without the need to flex the cover plate 320. When fully inserted, the cover plate 320 may be retained in position by the cover plate retention slot 334 formed by the top rail 330 and bottom rail 332 on three sides of the cover plate 320, and may be prevented from sliding back out by additional hardware or support elements (not shown) such as a pin or clip, adjacent gaspath component (with an excess portion of the cover plate 320 extending a length of the recess 340), or by a fit with sufficient friction.

The use of recess 340 permits the use of a less flexible material for cover plate 320 since flexure is not needed to install the cover plate 320 into the cover plate retention slot 334, and may permit use of metal alloy or CMC materials.

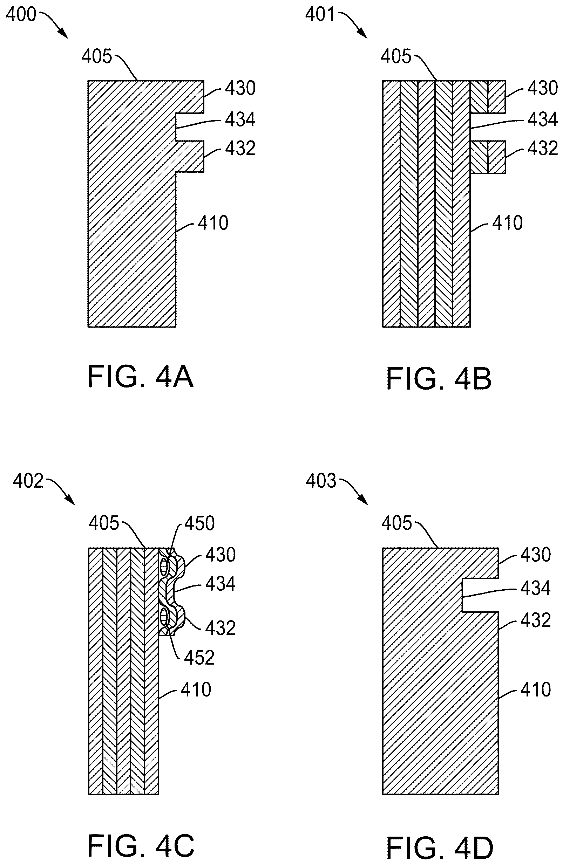

With reference to FIG. 4A, detail of an embodiment of having a metal alloy gaspath component 400 is disclosed. In this embodiment, the cover plate retention slot 434 may be machined into a thickened portion at the top of the sidewall of cavity 410 to form a top rail 430 and a bottom rail 432 adjacent the non-gaspath surface 405.

With reference to FIG. 4B, detail of an embodiment of having a CMC gaspath component 401 is disclosed. In this embodiment, the cover plate retention slot 434 may be machined into a thickened portion at the top of the sidewall of cavity 410 that is formed of additional plies that have been densified. The machined cover plate retention slot 434 leaves additional portions of densified wall to form a top rail 430 and a bottom rail 432 adjacent the non-gaspath surface 405. In a variation of this embodiment, the machining may be performed on a tackified or partially densified preform, which is thereafter densified to form the component.

With reference to FIG. 4C, detail of another embodiment of having a CMC gaspath component 402 is disclosed. In this embodiment, the cover plate retention slot 434 may be formed into the preform of the component by laying up the preform with one or more layers positioned over a first noodle 450 forming the top rail 430 and a second noodle 452 spaced therefrom forming the bottom rail 432 in the preform, with the space therebetween forming the cover plate retention slot 434 into walls of cavity 410 adjacent the non-gaspath surface 405. The resulting slot 434 in densified component 402 may be further defined with machining or material coating/machining, if desired.

With reference to FIG. 4D, detail of an embodiment of having either a metal alloy or a CMC gaspath component 403 is disclosed. In this embodiment, the cover plate retention slot 434 may be machined into the top of the sidewall of cavity 410 to form a top rail 430 and a bottom rail 432 adjacent the non-gaspath surface 405. In such an embodiment, the machining may also involve removing material forming the top rail 430 on a minor portion of the side walls and the second end wall to permit the insertion of a cover plate.

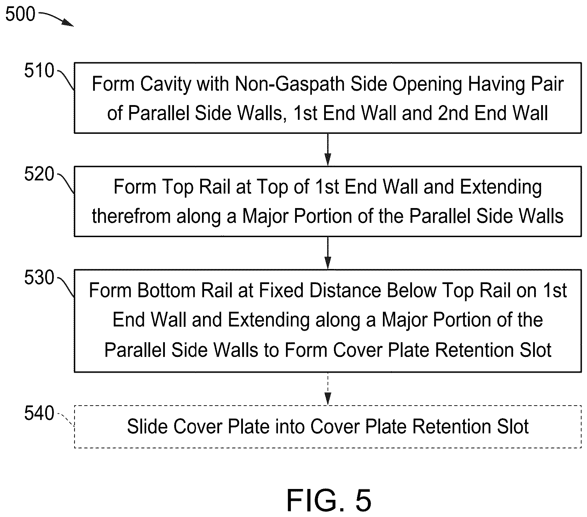

With reference to FIG. 5, an example flow diagram of cover plate retention method 500 for a gaspath component of a turbine engine is illustrated, wherein the gaspath component has a hot side configured for exposure to a hot gaspath of the turbine engine and an opposing non-gaspath side.

The method 500 includes a step 510 of forming a cavity having an opening disposed on the non-gaspath side of the gaspath component, the opening having a pair of parallel side walls, a first end wall, and a second end wall.

The method 500 also includes a step 520 of forming a top rail disposed at a top of the first end wall and extending therefrom along a major portion of the top of each of the parallel side walls, and a step 530 of forming a bottom rail disposed a fixed or specified distance below the top rail on the first end wall and extending therefrom along at least the major portion of each of the parallel side walls to form a cover plate retention slot having a height equal to the fixed or specified distance.

In embodiments of method 500 wherein the gaspath component is made of superalloy, the step 520 of forming the top rail and step 530 of forming the bottom rail may include machining the cover plate retention slot into the first end wall, and into the major portion of the parallel side walls of the opening.

In embodiments of method 500, the opening may be substantially rectangular, and the method 500 may further include a step 540 of sliding a substantially rectangular cover plate into the cover plate retention slot.

In embodiments of method 500 wherein the gaspath component is formed of ceramic matrix composite (CMC), the steps 520 and 530 of forming the top rail and forming the bottom rail may include machining the cover plate retention slot into the first end wall, and into the major portion of the parallel side walls of the opening before or after densification.

In an example embodiment, the present invention may include a cover plate retention system for a ceramic matrix composite (CMC) blade outer air seal (BOAS) segment of a turbine engine, wherein the CMC BOAS segment has a hot side configured for exposure to a hot gaspath of the turbine engine and an opposing non-gaspath side. The CMC BOAS segment includes a cavity having a substantially rectangular opening disposed on the non-gaspath side of the CMC BOAS segment, the opening having a pair of parallel side walls, a first end wall, and a second end wall. A top rail is disposed at a top of the first end wall and extends therefrom along a major portion of the top of each of the parallel side walls. A bottom rail is disposed a fixed or specified distance below the top rail on the first end wall and extends therefrom along at least the major portion of each of the parallel side walls to form a cover plate retention slot. A substantially rectangular metal cover plate is dimensioned to slidably engage the cover plate retention slot and cover the opening of the cavity.

In an embodiment of the CMC BOAS segment, the bottom rail may extend a full length of the parallel side walls to form a sealing structure. In a further embodiment, a portion of the non-gaspath side of the CMC BOAS segment transverse to the second end wall may be recessed to a height of the bottom rail so as to permit the substantially rectangular metal cover plate to engage the cover plate retention slot without flexing.

Embodiments in accordance with the present invention alloy for use of simple cover plates to enclose cavities or for impingement cooling in applications where mechanical adhesion such as brazing or welding is not a viable solution, such as when the materials are incompatible metal alloys or incompatible CMC/metal alloy.

Additionally, embodiments in accordance with the present invention may provide better sealing structures to reduce leakage around the cover plate in comparison to pressure-only cover plate installations.

In addition to the various fabrication methods disclosed herein, embodiments of the present invention may use various other fabrication methods such as casting, stamping, machining, sacrificial plies, etc. without departing from the scope of the present invention

While the present invention has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present invention.

## Claims

1. A cover plate retention system for a turbine engine (20), the cover plate retention system comprising a gaspath component (200;300;400;401;402;403) having a hot side configured for exposure to a hot gaspath of a turbine engine (20) and an opposing non-gaspath side (205;305;405), the gaspath component (200...403) comprising:
a cavity (210;310;410) having an opening disposed on the non-gaspath side (205;305;405) of the gaspath component (200...403);
a pair of parallel side walls (212;312), a first end wall (214;314), and a second end wall (215;315) collectively defining the cavity (210;310;410);
a top rail (230;330;430) disposed at a top of the first end wall (214;314) and extending therefrom along a major portion of the top of each of the parallel side walls (212;312); and
a bottom rail (232;332;432) disposed a distance below the top rail (230;330;430) on the first end wall (214;314) and extending therefrom along at least the major portion of each of the parallel side walls (212;312) to form a cover plate retention slot (234;334;434).

2. The cover plate retention system of claim 1, wherein the opening is rectangular, the system further comprising a rectangular cover plate (220;320) dimensioned to slidably engage the cover plate retention slot (234;334;434).

3. The cover plate retention system of claim 2, wherein the rectangular cover plate (220;320) is flexible to permit insertion into the cover plate retention slot (234;334;434).

4. The cover plate retention system of any preceding claim, wherein a portion of the non-gaspath side (305) of the gaspath component (300) transverse to the second end wall (315) is recessed to a height of the bottom rail (332) so as to permit the cover plate (320) to engage the cover plate retention slot (334) without flexing.

5. The cover plate retention system of any preceding claim, wherein the cover plate (220;320) is metallic.

6. The cover plate retention system of any of claims 1 to 4, wherein the cover plate (220;320) is formed of a ceramic matrix composite.

7. The cover plate retention system of any preceding claim, wherein the gaspath component (200...403) is a ceramic matrix composite (CMC) component.

8. A cover plate retention method for a turbine engine (20), the gaspath component (200;300;400;401;402;403) having a hot side configured for exposure to a hot gaspath of the turbine engine (20) and an opposing non-gaspath side (205;305;405), the method comprising:
forming a cavity (210;310;410) in the gaspath component (200...403) having an opening disposed on the non-gaspath side (205;305;405) of the gaspath component (200...403), the gaspath component (200...403) having a pair of parallel side walls (212;312), a first end wall (214;314), and a second end wall (215;315) collectively defining the cavity (210;310;410);
forming a top rail (230;330;430) disposed at a top of the first end wall (214;314) and extending therefrom along a major portion of the top of each of the parallel side walls (212;312); and
forming a bottom rail (232;332;432) disposed a distance below the top rail (230;330;430) on the first end wall (214;314) and extending therefrom along at least the major portion of each of the parallel side walls (212;312) to form a cover plate retention slot (234;334;434).

9. The method of claim 8, wherein the gaspath component (400;403) is made of superalloy and forming the top rail (430) and forming the bottom rail (432) includes machining the cover plate retention slot (434) into the first end wall, and into the major portion of the parallel side walls.

10. The method of claim 8, wherein:
the gaspath component (401;402;403) is formed of ceramic matrix composite (CMC);
the method includes densifying a preform of the gaspath component; and
forming the top rail (430) and forming the bottom rail (432) includes machining the cover plate retention slot (434) into the first end wall, and into the major portion of the parallel side walls before or after densification.

11. The method of claim 8 or 10, wherein:
the gaspath component (402) is formed of ceramic matrix composite (CMC);
forming the top rail (430) and forming the bottom rail (432) includes laying up a preform with one or more layers positioned over a first noodle (450), to form the top rail (430) in the preform, and over a second noodle (452) to form the bottom rail (432) in the preform, wherein the second noodle (452) is spaced from the first noodle (450); and
the method includes densifying the preform, wherein the space between the first noodle (450) and the second noodle (452) forms the cover plate retention slot (434) into the first end wall and the major portion of the parallel side walls after densification.

12. The method of any of claims 8 to 11, wherein the opening is rectangular, and the method further comprising sliding a rectangular cover plate (220;320) into the cover plate retention slot (234;334;434).

13. The method of any of claims 8 to 12, wherein:
the method further comprises forming a recess (340) into a portion of the non-gaspath side (305) of the gaspath component (300) transverse to the second end wall (315), with the recess (340) disposed at a height of the bottom rail (332) so as to permit the cover plate (320) to engage the cover plate retention slot (334) without flexing; or
the cover plate (220;320) is metallic, and sliding the cover plate (220;320) into the cover plate retention slot (334) comprises flexing of the cover plate (334).

14. The method or cover plate retention system of any preceding claim, wherein the gaspath component (200...403) is a ceramic matrix composite (CMC) blade outer air seal (BOAS) segment of a turbine engine.

15. The method or cover plate retention system of any preceding claim, wherein the bottom rail (232;332;432) extends a full length of the parallel side walls (212;312) to form a sealing structure.
